Europäisches Patentamt

European Patent Office

Office européen des brevets

(11) Numéro de publication : **0 526 332 A1**

# (12) DEMANDE DE BREVET EUROPEEN

(21) Numéro de dépôt : **92402188.4**

(22) Date de dépôt : **30.07.92**

(51) Int. Cl.$^5$ : **C11D 13/22, B26D 5/26, B23D 25/04, B23D 36/00, B26D 1/62**

(30) Priorité : **02.08.91 FR 9109910**

(43) Date de publication de la demande :
**03.02.93 Bulletin 93/05**

(84) Etats contractants désignés :
**BE DE ES GB IT NL**

(71) Demandeur : **Rochet, Georges**
**16, rue Rempart de Touronc**
**F-09100 Pamiers (FR)**

(72) Inventeur : **Rochet, Georges**
**16, rue Rempart de Touronc**
**F-09100 Pamiers (FR)**

(74) Mandataire : **Dronne, Guy**
**Cabinet BEAU de LOMENIE, 55, rue**
**d'Amsterdam**
**F-75008 Paris (FR)**

(54) **Dispositif de découpe d'un pain de savon.**

(57)  L'invention concerne un appareil pour couper en morceaux de longueur L variable un pain de savon défilant à une vitesse v.

Le dispositif comprend un chariot mobile (16) qui porte l'organe de coupe (14) et qui peut être déplace en translation en synchronisme avec le pain de savon (10). Pour celà un moteur (28) entraîne en permanence à la fois l'organe de coupe et le chariot (16). Le chariot est animé d'un mouvement de va-et-vient (F,F') par l'intermédiaire du système chaîne, roues dentées (50, 52, 54) et d'un organe de transmission (24) homothétique, donnant un rapport d'homothétie dépendant de L.

FIG.1

La présente invention a pour objet un dispositif de découpe d'un pain de savon.

De façon plus précise, l'invention concerne un dispositif pour découper un pain de savon en morceaux de longueur variable L, le pain de savon sortant d'une machine d'étirage à une vitesse v également variable.

Les dispositifs de découpe de pain de savon pour être efficaces doivent permettre le découpage en morceaux de longueur prédéterminée avec des cadences élevées, par exemple de l'ordre de 500 découpes à la minute. Il est également tout à fait nécessaire que la découpe soit nette, c'est-à-dire parfaitement d'équerre par rapport à la longueur du morceau de savon. Il est également nécessaire que la machine puisse être programmée ou adaptée en fonction de la longueur L que l'on veut donner à chaque morceau de savon lors d'une phase d'utilisation du dispositif de découpe et que, d'autre part, la machine puisse s'adapter aux vitesses variables de sortie du pain de savon de l'étireuse.

Il existe déjà des appareils de découpe de pain de savon mais qui ne permettent pas d'obtenir une adaptation continue des longueurs de découpe, ni de fournir les cadences énoncées ci-dessus.

Un objet de la présente invention est de fournir un dispositif de découpe de pain de savon qui satisfasse mieux que ceux de l'état de la technique aux conditions et paramètres définis ci-dessus.

Pour atteindre ce but, le dispositif de découpe de pain de savon selon l'invention, pour découper un pain de savon en morceaux de longueur L variable et sortant d'une machine à une vitesse v variable, se caractérisé en ce qu'il comprend un chariot mobile en translation selon la direction XX' de sortie dudit pain, un organe rotatif de découpe monté sur ledit chariot et présentant un axe de rotation parallèle à la direction XX' ; un dispositif de transmission présentant une première extrémité solidaire dudit chariot et une deuxième extrémité, ledit dispositif de transmission comportant des moyens pour fixer un rapport réglable k fonction linéaire de L entre l'amplitude des déplacements de ces première et deuxième extrémités, des moyens pour élaborer une information représentative de ladite vitesse v; des moyens d'entraînement en rotation continu avec une vitesse fonction de ladite vitesse v et de ladite longueur L; des moyens pour relier lesdits moyens d'entraînement audit organe de découpe; et des moyens de commande pour relier lesdits moyens d'entraînement à la deuxième extrémité du dispositif de transmission pour communiquer cycliquement à celle-ci un mouvement alterné sensiblement linéaire comprenant une phase à vitesse constante déterminée par lesdits moyens d'entraînement dans le sens de déplacement dudit pain durant la phase active dudit organe de découpe, par quoi ledit chariot mobile est déplacé en synchronisme avec le pain de savon pendant toute la phase de découpe par ledit organe rotatif de découpe.

On comprend qu'ainsi on obtient effectivement un dispositif de découpe qui permet d'obtenir une découpe d'équerre par rapport à la longueur du pain de savon puisque le chariot mobile portant l'organe de découpe se déplace en synchronisme avec le pain durant toute la phase active de l'organe de découpe. On comprend également que le dispositif s'adapte à toute longueur L de découpe des morceaux de savon puisque le déplacement effectif du chariot mobile dépend de cette longueur L et que la vitesse de rotation de l'organe de découpe et la vitesse de déplacement du chariot mobile dépendent également de la valeur de L. Enfin, on comprend que la vitesse de déplacement du chariot et la vitesse de rotation de l'organe de découpe sont adaptées en permanence à la vitesse v effective de sortie du pain de savon. En outre, du fait que les moyens d'entraînement sont actifs de façon continue, on a des cycles continus de déplacement de l'organe de découpe comportant la phase active et des phases de retour à la position initiale permettant d'atteindre des cadences de découpe très élevées.

D'autres caractéristiques et avantages de la présente invention apparaîtront plus clairement à la lecture de la description qui suit de plusieurs modes de réalisation de l'invention donnés à titre d'exemples non limitatifs. La description se réfère aux figures annexées sur lesquelles :

- la figure 1 est une vue d'ensemble du dispositif de découpe montrant l'ensemble de commande et l'ensemble de transmission des différents mouvements ; et

- la figure 2 est une vue de détail selon la flèche A de la figure 1 montrant plus particulièrement l'organe de découpe.

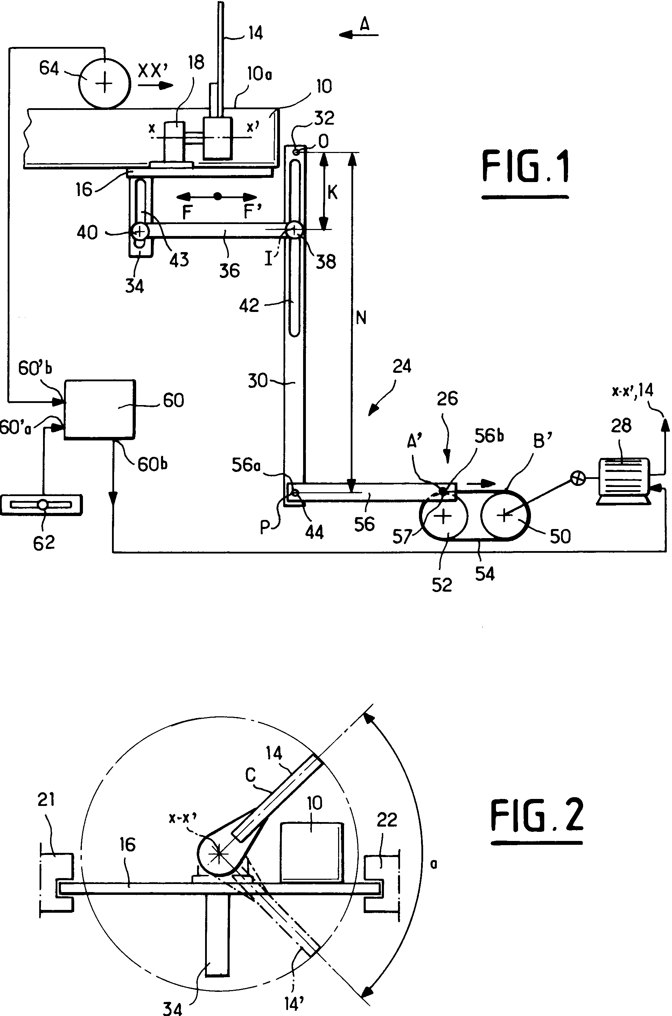

Sur les figures 1 et 2, on a représenté le pain de savon 10 sortant de l'étireuse qui n'est pas représentée elle-même. Le pain 10 se déplace selon la direction XX' à une vitesse variable v. L'organe de découpe, constitué par exemple par la lame 14 mais qui pourrait également être constitué par un fil, est monté sur un chariot mobile 16. La lame 14 est montée à rotation autour de l'arbre xx' parallèle à la direction XX'. L'arbre xx' est supporté par un palier 18 solidaire du plateau mobile 16 et entraîné en rotation par un moteur, comme on l'expliquera ultérieurement. Comme le montre mieux la figure 2, le chariot mobile 16 peut se déplacer en translation selon la direction FF' parallèle à XX'. Par exemple, les bords du chariot 16 sont guidées par les glissières latérales 21 et 22 qui sont fixes par rapport au bâti du dispositif.

Sur la figure 2, on a fait apparaître l'angle a de rotation de la lame de découpe 14 correspondant à la phase active, c'est-à-dire à la phase correspondant au découpage effectif du pain de savon 10. Dans le cas de la présente description, l'angle a correspond à 90° et, en conséquence, la phase active de découpe correspond à un quart d'un tour complet effectué par la lame 14. Sur la figure 2, la référence 14' désigne la position de la lame 14 à la fin de la phase active de découpe.

Le déplacement en translation selon la direction FF' du chariot mobile 16 est réalisé successivement par un organe de transmission 24, un organe de commande 26 et un moteur électrique 28 ou plus généralement un dispositif d'entraînement en rotation. Le moteur 28 entraîne également l'organe de découpe 14 par l'intermédiaire d'une transmission convenable autorisant les déplacements du chariot mobile 16. L'organe de transmission 24, dans l'exemple particulier considéré, est constitué par une tige 30 montée pivotante autour d'un axe fixe 32 solidaire du bâti de la machine et disposé perpendiculairement à la direction XX'. L'organe de transmission 24 comporte également une pièce 34 qui est solidaire de la face inférieure du plateau mobile 16. Une tige "horizontale" 36 relie la pièce 34 et la première tige 30. La position de la tige 36 peut être réglée en "hauteur" par la coopération de coulisseaux, respectivement référencés 38 et 40 montés aux extrémités de la tige 36, ces coulisseaux 38 et 40 pouvant être immobilisés dans des glissières 42 et 43 respectivement des tiges 30 et de la pièce 34.

Si l'on appelle I le centre du coulisseau 38, P un point correspondant à l'extrémité 44 de la tige 30 et 0 le centre de l'axe de pivotement 32, on voit qu'il existe une homothétie entre le déplacement du point P et le déplacement du point I, cette homothétie correspondant au rapport des bras de levier entre les points I et P, ce rapport étant appelé K/N dans le cas particulier, ce rapport étant égal à k.

Le déplacement de l'extrémité 44 de la tige 30 est commandé, comme on l'a déjà indiqué, par un dispositif de commande 26. Celui-ci est constitué dans l'exemple particulier considéré par deux roues dentées 50 et 52 dont les axes de rotation sont perpendiculaires à la direction XX' et par une chaîne 54 montée sur les roues dentées 50 et 52 et entraînée sans glissement par celles-ci. L'organe de commande 26 comporte également une tringle 56 dont une première extrémité 56a est solidaire de l'extrémité 44 de la tige 30 et dont l'autre extrémité 56b est solidaire d'un point 57 de la chaîne 54. La roue dentée 50 est solidaire en rotation de la sortie du moteur 28.

Le dispositif de découpe comporte également un circuit de commande 60 qui permet par ses sorties 60a et 60b de contrôler les vitesses de rotation des moteurs 20 et 28. Le circuit de commande 60 reçoit sur son entrée 60'a un signal élaboré par exemple à l'aide du potentiomètre 62 et qui est représentatif de la longueur L de découpe des morceaux de savon. Le circuit de commande 60 reçoit sur sa deuxième entrée 60'b un signal électrique représentatif de vitesse de déplacement v du pain de savon. Cette information est par exemple délivrée par une roue codeuse 64 qui est en contact permanent avec la face supérieure 10a du pain de savon. Ainsi, la vitesse de rotation de chacun du moteur 28 est une fonction prédéterminée des paramètres v et L.

Lorsqu'on veut faire fonctionner le dispositif de découpe, on commence par régler la position de la tige 36 en fonction de la valeur L de longueur de coupe. Le coulisseau 38 et donc le coulisseau 40 sont positionnés de telle manière qu'on ait la relation :

$$K = \frac{L \times M}{N}$$

expression dans laquelle M est la longueur de la chaîne 54.

Puis on entre, à l'aide du potentiomètre 62, l'information de longueur de coupe désirée L et la roue codeuse 64 fournit au circuit de commande 60 l'information réelle de vitesse d'avance v du pain de savon. Le moteur 28 est alors commandé en continu avec une vitesse de rotation convenable de telle manière que l'organe de coupe 14 fasse un tour pour une avance L du pain de savon et que le point 57 de la chaîne 54 fasse également un tour durant le même temps qui représente bien sûr le cycle de base du dispositif de découpe.

Dans l'exemple décrit, la distance entre les axes des roues dentées 50 et 52 est égale à πR, si l'on appelle R le rayon commun des roues. La roue 50 doit donc faire deux tours pour que le point 57 parcourt un tour. Le moteur 28 est relié à l'organe de découpe et à la roue dentée 50 par des moyens de transmission permettant d'appliquer ces deux vitesses de rotation. De plus, lorsque le point 57 de la chaîne 54 se déplace de la distance A'B', correspondant à une des deux portions rectilignes de la chaîne, cela correspond à un quart du temps que le point 57 met pour faire un tour complet. Cela correspond donc à l'angle a associé à la phase active de l'organe de découpe 14. De plus, le moteur 28 est relié à la roue 52 et à l'arbre xx' de l'organe de découpe pour que l'organe de découpe occupe la position C de la figure 2 lorsque le point 57 de la chaîne occupe la position A'.

Lorsque le point 57 de la chaîne 54 passe du point A' au point B', l'extrémité 44 de la première tige 30 est déplacée en translation linéaire a une vitesse constante imposée par le moteur 28, puisque la tige 56 est elle-même déplacée sensiblement en translation rectiligne. L'amplitude de la translation est égale à M/4 et sa direction est celle de l'avance du pain de savon. Il en résulte que, grâce au choix du rapport d'homothétie k fourni par l'organe de transmission 24 et qui est adapté à la longueur de coupe L, le chariot mobile 16 se déplace effectivement d'une longueur L/4 à la vitesse v durant la phase active de découpe. On obtient ainsi un déplacement rigoureusement synchrone du chariot et donc de l'organe de coupe avec l'avance du pain de savon 10. On obtient ainsi une découpe rigoureusement d'équerre du pain de savon. Durant les 3/4 restants du cycle de base, le chariot mobile 16 est ramené à la position initiale de coupe.

En outre, grâce à la roue codeuse 64, la vitesse v d'avance du pain de savon est mesurée en permanence et la vitesse de rotation du moteur 28 est modifiée en conséquence.

Il va de soi que de nombreuses modifications pourraient être apportées au mode de réalisation de l'invention décrit ci-dessus. En particulier, la chaîne et les roues dentées formant l'organe de commande pourraient être remplacées par une came ou un système à hélice interposé entre le moteur 28 et l'extrémité 44 de la tige 30 à condition qu'on obtienne la même loi de déplacement pour ladite extrémité 44.

**Revendications**

1. Dispositif de découpe d'un pain de savon en morceaux de longueur L variable et sortant d'une machine à une vitesse v variable, caractérisé en ce qu'il comprend :

   un chariot (16) mobile en translation selon la direction XX' de sortie dudit pain (10) ;

   un organe rotatif de découpe (14) monté sur ledit chariot, présentant un axe de rotation (xx') parallèle à la direction XX' et présentant une phase active de découpe durant une fraction de sa rotation ;

   un dispositif de transmission (24) présentant une première extrémité (34) solidaire dudit chariot et une deuxième extrémité (44), ledit dispositif de transmission comportant des moyens (30, 34, 36) pour fixer un rapport réglable k fonction linéaire de L entre l'amplitude des déplacements de ses première (34) et deuxième (44) extrémités ;

   des moyens (64) pour élaborer une information représentative de ladite vitesse v ;

   des moyens d'entraînement continu (28) en rotation avec une vitesse fonction de ladite vitesse v et de ladite longueur L ;

   des moyens pour relier lesdits moyens d'entraînement audit organe de découpe (14) ; et

   des moyens de commande (26) pour relier lesdits moyens d'entraînement (28) à la deuxième extrémité (44) des moyens de transmission pour lui communiquer un mouvement alterné comprenant une phase à vitesse constante dans le sens de déplacement (XX') dudit pain (10) durant la phase active dudit organe de découpe, par quoi ledit chariot mobile (16) est déplacé en synchronisme avec le pain de savon pendant toute la phase de découpe par ledit organe rotatif de découpe.

2. Dispositif de découpe selon la revendication 1, caractérisé en ce que lesdits moyens de transmission comprennent une tige (30) dont une première extrémité est montée sur un axe de rotation (32) et dont l'autre extrémité (44) est reliée aux moyens de commande (26), et un organe (38) déplaçable le long de ladite tige (30), ledit organe (38) étant relié audit chariot mobile (16) pour communiquer à celui-ci un déplacement homothétique réglable dans le rapport k du déplacement de sa deuxième extrémité (44).

3. Dispositif de découpe selon la revendication 2, caractérisé en ce que lesdits moyens de commande comprennent deux roues dentées (50, 52) sur lesquelles est montée une chaîne (54), une desdites roues dentées étant entraînée en rotation par lesdits moyens d'entraînement (28), et une tringle (56) dont une extrémité (56b) est solidaire d'un point (57) de ladite chaîne et dont l'autre extrémité (56a) est solidaire de ladite deuxième extrémité (44) de ladite tige (30).

4. Dispositif de découpe selon la revendication 3, caractérisé en ce que lesdits dispositifs d'entraînement (28) sont reliés audit organe de découpe (14) et à ladite roue dentée (50) pour que ladite extrémité de tringle solidaire de ladite chaîne (54) décrive une trajectoire rectiligne pendant un temps correspondant au moins à la phase active de découpage de l'organe de découpe (14).

FIG.1

FIG.2

| Office européen des brevets | **RAPPORT DE RECHERCHE EUROPEENNE** | Numero de la demande |
|---|---|---|
| | | EP    92 40 2188 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0 199 155 (B. BRIANO)<br>* le document en entier *<br>--- | 1 | C11D13/22<br>B26D5/26<br>B23D25/04 |
| A | GB-A-1 542 988 (NIHON ELECTRONIC INDUSTRY CO.,LTD.)<br>* revendications; figure 2 *<br>----- | 1 | B23D36/00<br>B26D1/62 |
| | | | **DOMAINES TECHNIQUES RECHERCHES (Int. Cl.5 )**<br><br>C11D<br>B26D<br>B23D |

Le présent rapport a été établi pour toutes les revendications

| Lieu de la recherche | Date d'achèvement de la recherche | Examinateur |
|---|---|---|
| LA HAYE | 03 NOVEMBRE 1992 | SERBETSOGLOU A. |